# EUROPÄISCHE PATENTSCHRIFT

(11) **EP 4 249 408 B1**
(45) Veröffentlichungstag und Bekanntmachung des Hinweises auf die Patenterteilung: **29.10.2025**
(21) Anmeldenummer: 23000029.1
(22) Anmeldetag: 22.02.2023
(51) Int. Cl.: B65G 35/06, B65G 17/08

(54) **TANSPORTEINHEIT FÜR DEN TRANSFER VON ROLLWÄGEN**
TRANSPORT UNIT FOR THE TRANSFER OF ROLL TRUCKS
UNITÉ DE SPORT DE TANS POUR LE TRANSFERT DE CHARIOTS ROULANTS

(30) Priorität: 24.03.2022 IT 202200005843
(43) Veröffentlichungstag der Anmeldung: 27.09.2023
(73) Patentinhaber: Tanzer Maschinenbau Srl, 39011 Lana (BZ) (IT)
(72) Erfinder: Tanzer, Peter, I-39011 Lana (BZ) (IT); Fliri, Adrian, 39020 Taufers im Münstertal (Bz) (IT); Mantinger, Martin, 39010 Nals (Bz) (IT); Schnitzer, Josef, 39019 Dorf Tirol (Bz) (IT)
(74) Vertreter: Oberosler, Ludwig

(56) Entgegenhaltungen:
- EP-A1- 0 482 531
- EP-A1- 2 100 827
- EP-A1- 2 990 360
- GB-A- 2 138 376
- GB-A- 2 300 614
- JP-A- S61 145 007
- US-A- 3 779 364
- US-A- 4 641 742

## Beschreibung

Die Erfindung bezieht sich auf eine Transporteinheit für den Transfer von Rollwägen, welche mit einer oder zwei zueinander parallel angeordneten, motorbetriebenen Transportketten versehen ist und welche, zwecks Erstellung einer Transportstrecke mit eventueller Auffahrrampe, Abfahrrampe, sowie Streckenabschnitte mit Steigung und/oder Gefälle, mit weiteren gleichartigen Transporteiheiten verbindbar ist.

Es ist bekannt dass, z.B. in Supermärkten die leeren Pfandbehälter unterschiedlicher Art und unterschiedlicher Hersteller für den Transport verschiedener Waren, zwecks Rückerstattung an die entsprechenden Lieferanten, auf Rollwägen gestapelt werden welche mit zwei seitlichen, gitterartigen Seitenwänden ausgestattet sind und als Gitterrollwägen (roll cages) bezeichnet werden. Die besagten Rollwägen weisen eine Ladefläche auf, welche unterhalb an einer Seite mit zwei fest angebrachten Rädern und an der gegenüberliegenden Seite mit zwei um eine senkrechte Achse drehbar gelagerten Rädern ausgestattet ist, während oberhalb, an jeder Seite welche sich parallel zur Transferrichtung des Wagens erstreckt, eine Gitterwand zwecks Zusammenhalten der auf der Ladefläche gestapelten Behälter, vorgesehen ist. An mindestens einer der besagten seitlichen Gitterwände wird üblicherweise ein Kodex, ein Logo oder das Markenzeichen des Supermarkets angebracht währen die wahllos gestapelten, starren oder faltbaren, an die verschiedenen Lieferante zurück zu erstattenden Pfandbehälter durch einen angebrachten Kodex und/oder durch die Farbe, die Form oder durch anbgebrachte Logos oder Markenzeichen erkennbar sind. Dank dieses Transportsystems ist der Betreiber, z.B. ein Supermarkt, welcher die Rückgabe der Pfandbehälter durchführt, mindestens an einer der Gitterwände ermittelbar während die Zugehörigkeit der einzelnen gestapelten Leerbehälter an beiden sich gegenüberliegenden Seiten, welche nicht von den Gitterwänden abgedeckt sind, ermittelbar ist.

Zur Zeit erfolgt das Zählen der aufzuladenden Gitterwägen des selben Betreibers und der leeren zurückzuerstattenden Pfandbehälter mit Anmerkung der jeweiligen Zugehörigkeit visuell. Die Erhebung und Auflistung der Gitterwägen, der auf diesen gestapelten Pfandbehälter und der jeweiligen Zugehörigkeit dieser, erfolgt auf dem Weg der Gitterwägen vom Verwahrungsraum, eventuell über eine Verladerampe, zum Transportmittel. Die Auflistung der gesamten Ladung, bestehend aus Gitterwägen und Pfandbehälter, wird vom Transportbeauftragten übernommen, überprüft und gegengezeichnet. Diese Handlungen erfordern Zeit und verursachen öfters ungewollte Abzählfehler, bzw. ein erneutes Abzählen. Auch in größeren Betrieben werden die Rollwägen einzeln von Hand bewegt oder in Gruppen von einem Bediensteten mit Hilfe einer motorisierten Schub- oder Zugeinheit bewegt. Eine Bewegung der beladenen Gitterwägen von einem Stauraum zum Transportmittel mit eventuellen Kreuzungen der Transportwege, ist nicht bekannt.

Aus der US 5,957,055 ist ein Transportsystem für Behälter bekannt welches Schienen aufweist auf welchen Behälter, auf einer bestimmten ebenen Fläche, vollautomatisch in Längs- und in Querrichtung verschiebbar sind. Die Wägen für den Transport der Behälter bestehen aus einem oberen und einem unteren Wagen und werden elektrisch mittels, zwischen den Schienen befestigten, Statoren von Linearmotoren bewegt. Alle vier Räder der Wägen sind um eine senkrechte Achse schwenkbar gelagert damit der Wagen in Längsrichtung und, infolge Schwenken der Räder um 90° auf ausgeformten Drehtellern, auch in Querrichtung auf, zu den ersten Schienen, quer verlaufenden Schienen, verschoben werden zu können. Dieses Transportsystem ist nicht für den Transfer einfacher Gitterrollwägen (roll cages) geeignet welche über nur zwei schwenkbare Räder verfügen.

Aus der EP 2990360 A1 ist der Oberbegriff des Anspruchs 1 und ein Förderketten-Umsetzungssystem bekannt, wobei ein, mit den von den Kettengliedern senkrecht abstehenden, in einer Reihe quer zur Förderrichtung angeordneten Förderelementen (20) kämmender, Transferkamm (20) das Transportgut aufnimmt. Der besagte Transferkamm ist nicht vertikal und/oder gemäß der Steigung, bzw. dem Gefälle der Förderkette verstellbar und der Abstand zwischen den einzelnen Förderelementen quer zur Förderrichtung, bzw. zwischen den Reihen der Förderelemente in Transportrichtung, sind nicht festgelegt, bzw. nicht auf das Fördergut abgestimmt, wodurch das System für den Transport von Rollwägen nicht geeignet ist.

Die Erfindung stellt sich die Aufgabe eine Transporteinheit für den Transfer von Rollwägen, insbesondere für Gitterrollwägen welche mit weiteren Transporteinheiten, zwecks Errichtung von Transportstraßen, welche die einzelnen Gitterwägen, samt ihrer Last, mindestens einer Erkennungsstation, z.B. zwecks Erkennung, Zuordnung und Zählung der einzelnen Gitterwägen und der darauf gestapelten Pfandbehälter und/oder einer Verladestation zuführen, zu schaffen und welche eventuelle Streckenabschnitte mit Steigung, bzw. mit Gefälle und oder mit Umleitung auf eine andere Transportstrecke umfassen.

Zur Lösung dieser Aufgabe schlägt die Erfindung eine Transporteinheit gemäss Anspruch 1 vor. Die Transporteinheit kann beispielsweise mit folgenden Baueinheiten Verwendung finden:
- eine Einlaufplattform versehen mit seitlichen Einleitvorrichtungen zum händischen Zuführen der Wägen auf die folgende Transportstrecke und mit Lichtschranke oder Sonde zwecks Erkennung der Anwesenheit eines Rollwagens,
- eine Förderstrecke für die einzelnen Rollwägen welche aus mindestens einer Transporteinheit besteht welche mit Lichtschranken oder Sonden zwecks Erkennung der Präsenz, bzw. des Durchlaufs, der Rollwägen ausgestattet ist um deren Transfer zu steuern.

Längs der Förderstrecke können, z.B Bilderkennungsstationen, Stationen für das Ablesen verschiedener an den Rollwägen und/oder an den darauf geladenen Waren/Gebinden angebrachten Kodes und/oder Zählstationen, vorgesehen sein. Die erfindungsgemäße Transporteinheit welche allein oder in Verbindung mit mehreren Transporteinheiten eine Förderstrecke bildet weist eine oder zwei unter sich, in Querrichtung beabstandete Förderketten auf, deren Antriebs- und Umlenkräder, bzw. Antriebs- und Umlenkrollen, jeweils koaxial auf einer gemeinsamen Welle gelagert sind. Der obere Teil dieser Transportkette/Transportketten liegt auf einer Gleitplatte auf welche sich zwischen den Antriebs- und Umleiträdern erstreckt. Die erfindungsgemäße Transportkette besteht aus einer Reihe, quer zur Bewegungsrichtung der Kette verlaufenden, unter sich verketteten, Elementen welche auf der, den Rädern der Wägen zugewandten Seite sich in Längsrichtung erstreckende Auflagevorsprünge welche sich mit Vertiefungen abwechseln, aufweisen und aus Mitnahmeelementen mit, bezogen auf die Auflagevorsprünge, stärker vorstehenden Vorsprüngen deren Stirnseite eine vertikale Fläche und deren Rückenseite eine abgerundete oder abgeschrägte Form aufweist. Diese Mitnahmeelemente sind unter sich, in Laufrichtung der Kette, mehr als der Durchmesser der Räder der Rollwägen und weniger als der Achsabstand zwischen den Vorder- und den Hinterrädern, beabstandet. Der Abstand zwischen den einzelnen Mitnahmevorsprüngen ist kleiner als die Breite der Räder der Rollwägen so dass, vorzugsweise jedes Rad immer an mindestens zwei Vorsprüngen aufliegt. Vorzugsweise entspricht die Breite der Vorsprünge der Breite der Vertiefungen. Die Vertiefungen zwischen den Auflagevorsprüngen, bzw. zwischen den Mitnahmevorsprüngen, sichern den störungsfreien Überlauf der Räder der Rollwägen von der Auflaufplattform auf die erste Transporteinheit, bzw. von einer Transporteinheit auf die anschließende Transporteinheit, indem im besagten Bereich kammförmige Elemente vorgesehen werden deren Zinken welche einen Querschnitt aufweisen der den Vertiefungen zwischen den Auflagevorsprüngen entspricht, in diese eingreifen.

Der Transport der Rollwägen erfolgt normalerweise auf einer bestimmten Höhe bezogen auf den Fußboden, diese ist wesentlich durch die Höhenabmaße der Antriebs- und Umlenkräder der einzelnen Transportbänder und der Struktur einer eventuellen querverschiebbaren oder drehbaren Transporteinheit, bestimmt durch welche das Einlesen von Kodes, bzw. die Bilderkennung an der gestapelten Ladung an nicht, z.B. durch Gitter, abgedeckten Seiten möglich ist. Wegen dieser Notwendigkeit arbeitet mindestens die erste Transporteinheit mit einer Steigung um die Rollwägen von der Auflaufplattform mit seitlichen Einlaufführungen den folgenden Transporteinheiten zuführen zu können welche ebenfalls steigend verlaufen oder auf der erforderlichen Höhe parallel zum Fußboden verlaufen. Die Erfindung schließt nicht aus, dass die gesamte Transportstrecke, zusammen mit einer eventuellen Querverschubstation oder Drehstation, samt der Bilderhebung, z.B. des auf dem Rollwagen gestapelten Pfandgutes, mit dem Auflagebereich der Ketten der einzelnen Transporteinheiten entsprechend der Ebene des Fußbodens verläuft indem die Strukturen der Transport-, Verschub- und Dreheinheiten in Vertiefungen im Boden aufgenommen werden.

Um, trotz der Streckung der Transportketten durch Verschleiß, einen störungsfreien Transfer auf der gesamten Strecke zu sichern, sind die Ketten der einzelnen Transporteinheiten mit einem Spanner ausgestattet welcher mit einem Sperrmechanismus für die eingestellte Spannung versehen ist. Dieser verhindert, dass die Transportkette, infolge Streckung durch Verschleiß, insbesondere während der Anlauf- bzw. der Anhaltefase, die Eingriffposition am Antriebsrad überspringt. Es besteht weiters die Möglichkeit, dass ein Schub in Transportrichtung an der Kette, an einem abfallenden Streckenabschnitt oder verursacht durch einen Bediensteten oder durch Auftreffen eines folgenden Rollwagens, auftritt. Aus diesen Grund schlägt die Erfindung vor einen Spanner einzusetzen welcher auf bekannte Weise Druckfedern nutzt welche zwischen der feststehenden Struktur jeder Transporteinheit und den Umlenkrollen wirkt, indem die Halterung für die Federn einen Mechanismus mit einem, mittels Gewindespindel verstellbaren/einstellbaren Gleitelement aufweist welche quer zur Wirkung der Federn wirkt, wobei das Element eine schiefe Ebene aufweis um eine Veränderung der Wirkung der Federn zu erreichen indem es auf eine Zugstange wirkt welche fest mit der beweglichen Halterung der Umlenkrollen verbunden ist um den Druck der Federn auf die besagten Rollen zu varieren. Die Einstellposition der besagten Zugstange wird durch ein Spannelement gesichert welches mit einem Ende schwenkbar am feststehenden Element welches das quer verschiebbare Element trägt, gelagert ist, während das entgegengesetzte Ende eine Bohrung aufweist in welche die Zugstange eingesetzt ist welche unter Wirkung des Druckes seitens einer Feder, eine schräge Klemmposition an der Zugstange einnimmt um eine Rückbewegung der Zugstange zusammen mit dem Trägerelement für die Rollen der Spanneinrichtung zu verhindern, welche ein Nachlassen des auf die Transportkette wirkenden Spanndruckes verursachen würde. Das besagte Spannelement kann, entgegen der Wirkung einer Feder, mittels einer schiefen Ebene welche an einem Vorsprung des quer verschiebbaren Gleitelements vorgesehen ist, durch Betätigen der Einstellschraube, in eine Entriegelungsposition gebracht werden.

Jede der Transporteinheiten welche eine Transportstrecke bilden weisen erfindungsgemäß zwei Lichtschranken oder Sonden, zwecks Erhebung des Durchlaufs der Rollwägen und Steuerung der Förderbewegung, bzw. des Anhaltens, der selben an jedem der einzelnen Transporteinheiten, auf.

Die Erfindung wird anschließend anhand eines, auf den beigelegten Zeichnungen schematisch dargestellten, vorzuziehenden Ausführungsbeispieles einer erfindungsgemäßen Transporteinheit für Rollwägen näher erklärt, welche über zwei parallele Transportstrecken einer einzigen Erhebungsstation für, mit Pfandbehälter beladenen Gitterrollwägen, zugeführt werden.

Die Fig. 1 zeigt die Draufsicht auf eine Anlage zum Erheben und Zählen von, auf Gitterrollwägen (roll cages) gestapelten Pfandsteigen, welche aus zwei parallelen Transportstrecken für die Beschickung einer gemeinsamen Erhebungs- und Zählkabine für die Pfandsteigen besteht.

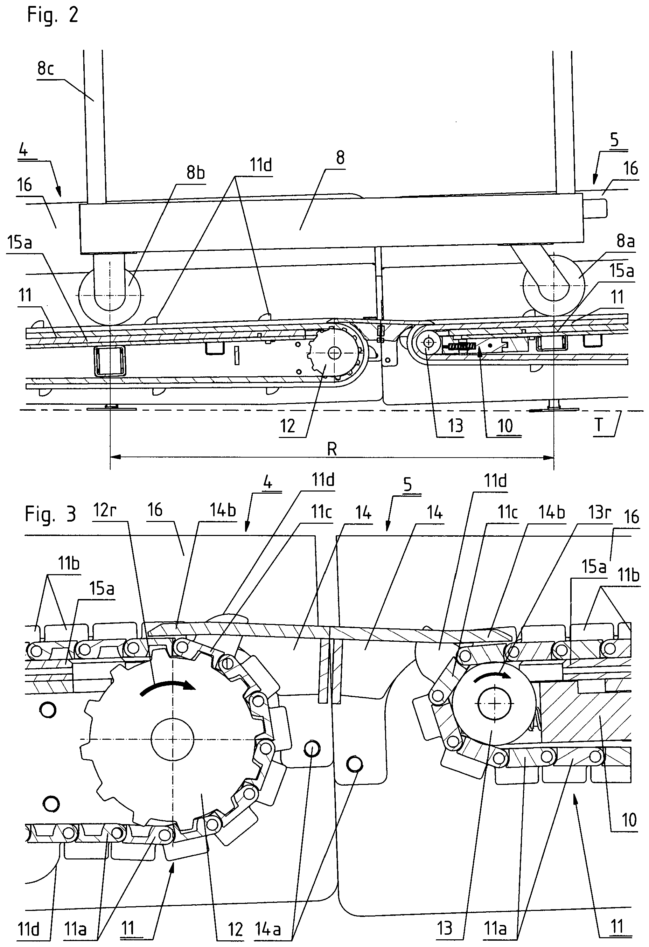

Die Fig. 2 zeigt in einer Schnittdarstellung gemäß einer vertikalen Schnittebene das Detail des Durchlaufbereiches eines Rollwagens beim Überwechseln von einer Transporteinheit auf die folgende Transporteinheit.

Die Fig. 3 zeigt, in vergrößertem Maßstab den Übergangsbereich zwischen zwei, mit Kammelementen ausgestatteten, Transporteinheiten welche als Brücke zwischen den beiden Transportelementen wirken.

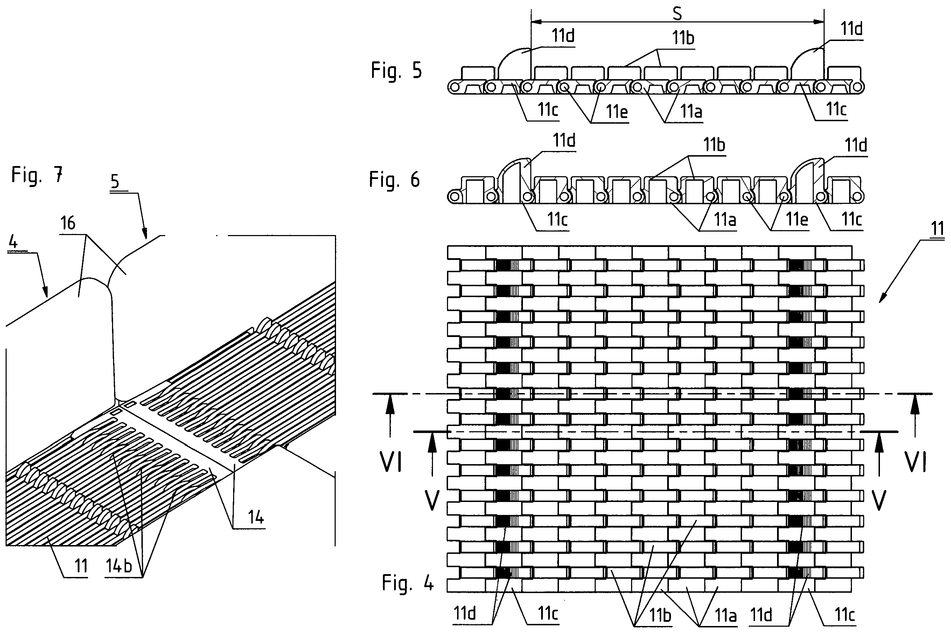

Die Fig. 4 zeigt die Draufsicht auf einen Teil einer erfindungsgemäßen Transportkette.

Die Fig. 5 zeigt die Schnittdarstellung der Transportkette gemäß der in Fig. 4 gezeigten, vertikalen Schnittebene V-V welche sich durch die Transportkette, im Bereich der, an den Querelementen vorgesehenen, Vertiefungen erstreckt.

Die Fig. 6 zeigt die Schnittdarstellung der Transportkette gemäß der in Fig. 4 gezeigten, vertikalen Schnittebene VI-VI welche sich durch die Transportkette im Bereich der, an den Querelementen vorgesehenen Mitnahme- und Auflagevorsprüngen erstreckt.

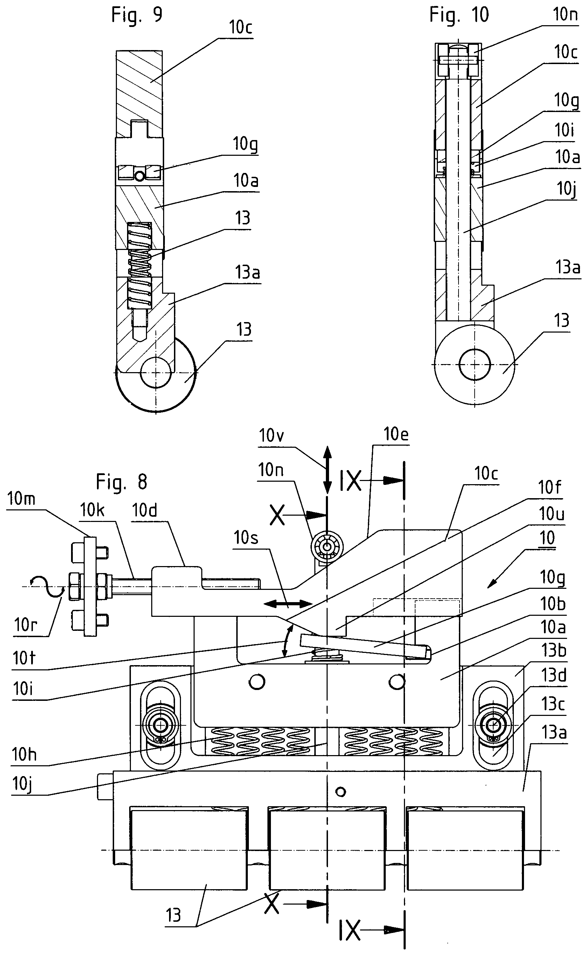

Die Fig. 7 zeigt in perspektivischer Darstellung das Detail der Kammelemente welche im Übergangsbereich von einer Transporteinheit auf die folgende Transporteinheit vorgesehen sind.

Die Fig. 8 zeigt die Draufsicht auf eine erfindungsgemäße Spannvorrichtung für die erfindungsgemäßen Transportketten.

Die Fig. 9 zeigt eine Schittdarstellung gemäß der in Fig. 8 gezeigten Schnittebene IX-IX, welche durch den Gleitbereich zwischen dem feststehenden Teil und dem beweglichen Einstellelement des Spanners verläuft und welches mittels Gewindespindel betätigbar ist und mit schiefer Ebene versehener ist.

Die Fig. 10 zeigt eine Schnittdarstellung gemäß der in Fig. 8 gezeigten Schnittebene X-X welche durch die Achse der Einstellzugstange verläuft.

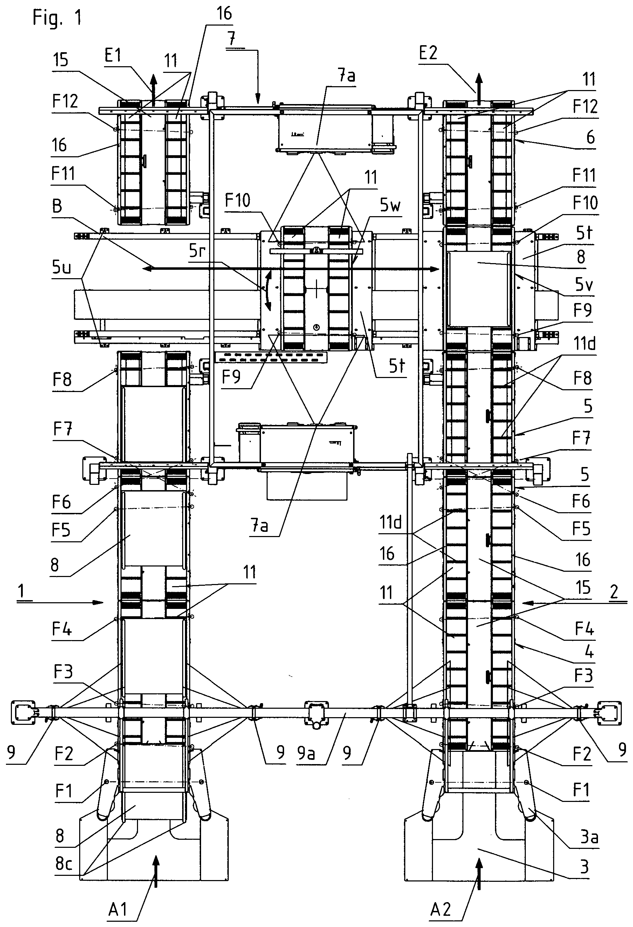

Die in Fig. 1 gezeigte Anlage zur Erhebung und Zählung der auf Gitterrollwägen transportierten Pfandsteigen besteht aus zwei parallelen Transportstrecken 1, 2 mit Zufuhr A1, A2 der Gitterrollwägen 8. Die Transportstrecken beliefern eine einzige gemeinsame Erhebungs- und Zählkabine 7 welche im mittleren Bereich zwischen den beiden Transportstrecken 1, 2 vorgesehen ist und von zwei Transfermechanismen 5t beschickt wird welche beide voneinander unabhängig auf gemeinsamen Führungsschienen 5u, quer zu den Transportstrecken 1, 2, verfahrbar sind, wobei beide Transfermechanismen mit einer individuell steuerbaren Transporteinheit 5v, 5w ausgestattet ist, wodurch eine Optimierung der Zeiten für den Transfer zwischen den Transportstrecken und der Erhebungskabine 7 ermöglicht wird.

Jede der Transportstrecken 1, 2 ist im Bereich der Aufnahme der Rollwägen mit einer Affahrrampe 3 versehen welche vorzugsweise eine leichte Steigung aufweist, seitlich mit Einleitführungen 3a mit frei laufenden Rollen versehen ist und eine Lichtschranke F1 aufweist um die Anwesenheit, bzw. den Durchlauf der Gitterrollwägen 8 zu erheben. Anschließend ist eine leicht ansteigende Transporteinheit 4 mit Lichtschranke F2 vorgesehen, diese erhebt die Präsenz des Rollwagens 8 nachdem dieser von einem Bediensteten von der Auffahrrampe 3 auf die erste Transporteinheit 4 geschoben worden ist. Auf der selben Transporteinheit 4 sind hintereinander weitere zwei, unter sich um mindesten die Länge der Rollwägen 8 beabstandete, Lichtschranken F3, F4 vorgesehen um seitlich an einer Überbrückung 9a angebrachte Kameras 9, zwecks Einlesen des Kodes oder/und einer Aufschrift/Abbildung/Marke welche seitlich auf mindestens einer der beiden Gitterwände angebracht sind und welche den Betrieb (z.B. Supermarkt) der die Rückerstattung der Pfandsteigen durchführt individualisieren, zu aktivieren. Anschließend an die besagte, mit beidseitig zwecks Bilderkennung vorgesehenen Kameras 9 ausgestatteter Identifizierungsstation, sind mehrere, eventuell ebenfalls ansteigende, Transporteinheiten 5 vorgesehen, um über einen Verweilbereich für mehrere der anschließenden gemeinsamen Erhebungskabine 7 zuzuführende Rollwägen 8, zu verfügen.

Entsprechend der Erhebungskabine 7 sind zwei getrennte, auf gemeinsamen Schienen 5u verschiebbare B, Mehanismen 5t für den Transfer, quer zu den Transportstrecken, vorgesehen, wobei diese mit einer individuell steuerbarer und gemäß einer vertikalen Achse drehbar 5r gelagerten Transporteinheit 5v, 5w ausgestattet sind, um die Zeiten für den Transfer zwische der Erhebungs- und Zählkabine 7 und den Transportstrecken 1, 2, sowie für das Auf- und Abladen an den Transporteinheiten 5v, 5w, zu rationalisieren.

Durch den besagten Transfer B, quer zu den Transportstrecken 1, 2, wird erreicht, dass jene Seiten der auf den Rollwägen gestapelten Pfandsteigen welche nicht durch die seitlichen Rückhaltegitter abgedeckt sind, für die Erhebung der Kodes, bzw. der Bilder, der Farben, der Geometrie, zwecks Erkennung der einzelnen gestapelten Steigen mittels Kamera, zugänglich sind. Beide Transporteinheiten 5v, 5w sind mit Lichtschranken F9, F10, zwecks Erkennung der Präsenz der Rollwägen 8, ausgestattet.

Vorteilhafterweise sind, im Bereich der letzten Transporteinheit 5, vor dem Transfer auf den Schienen 5u quer zur Transportstrecke, entsprechend einer Reihe bekannter quer angeordneter Lichtschranken, auch zwei sich kreuzende Sicherheits-Lichtschranken F6, F7 vorgesehen um den eventuellen Durchgang eines Bediensteten erfassen zu können, da dieser die besagten sich kreuzenden Lichtschranken mit einer anderen Sequenz durchbrechen würde als wenn diese durch einen Rollwagen geschehen würde. Nach dem Bereich des Quertransfers ist mindestens eine Transporteinheit 6 vorgesehen welche ebenfalls mit zwei Lichtschranken F11, F12 versehen ist von welcher die Rollwägen 8 beim Verlassen E1, E2 der Transportstrecke einer eventuellen Auslauframpe oder bekannten Transportmitteln, z.B. einem Bereich zur Sortierung der Pfandsteigen, zugeführt werden.

Um den störungsfreien Transfer der einzelnen Gitterrollwägen 8 auf den verschiedenen Transporteinheiten 4, 5, 5v, 5w sicherzustellen, schlägt die Erfindung Transportketten 11 vor welche aus der Verkettung mittels Zapfen 11e von quer zur Erstreckung der Kette angeordneten Auflageelementen 11a und Mitnahmeeleementen 11c besteht. Die Auflageelemente 11a weisen eine Reihe von Auflagevorsprünge 11b auf welche sich in Längsrichtung der Kette erstrecken, welche zueinander in Querrichtung weniger als die Breite der Räder der Rollwägen 8 beabstanndet sind um zwischenliegende Vertiefungen 11a zu bilden. Die quer angeordneten Mitnahmeelemente 11c weisen eine Reihe von Mitnahmevorsprünge 11d auf welche über die Auflagevorsprünge 11b hinausragen und mit einer vertikalen Stirnfläche ausgestattet sind welche auf die Räder der Rollwägen wirkt, während die Rückseite abgerundete oder abgeschrägte Form aufweist um, während der Auffahrfase, das Überfahren dieser Vorsprünge seitens der Räder der Rollwägen 8 zu erleichtern. Um das störungsfreie Überwechseln der beladenen Rollwägen 8 von einer Transporteinheit 4 auf die folgende transporteinheit 5 zu erleichtern sind, an die feststehende Struktur der Transporteinheit gebunden 14a, Kammelemente 14 vorgesehen welche Zähne 14b eine, dem Querschnitt der Vertiefungen zwischen den Auflagevorsprüngen 11b und den Mitnahmevorsprünge 11d der Transportkette 11, entsprechenden Breite und Stärke aufweisen so dass die obere Fläche der Zähne 14b in der selbenen Ebene mit der oberen Fläche der Auflagevorsprünge 11b verläuft. Die Bindung 14a ermöglicht durch ein Langloch eine Einstellung der Kammelemente in vertikaler Richtung und betreffend die Neigung um den Übergang zwischen den Endbereichen der Transporteinheiten 4, 5, auch wenn diese unterschiedliche Neigung aufweisen, sanft zu gestalten. Ein derartiges Kammelement 14 ist auch im Übergangsbereich von der Auffahrrampe 3 auf die erste Transporteinheit 4, bzw. von der letzten Transporteinheit 6 auf den Fußboden oder auf eine Entladerampe, vorgesehen.

Auf den Transporteinheiten 4, 5, 6, 5v, 5w kann im Längsmittelbereich, zwischen den zwei beabstandeten Transportketten 11, eine Abdeckung 15 vorgesehen sein welche eine kleinere Breite als jene des Radabstandes der Rollwägen 8 aufweist und unter welcher der Antriebsmechanismus 12r für die Antriebsräder 12 für die Transportketten 11 der Transporteinheit vorgesehen ist. Im Bereich zwischen den Antriebsrädern 12 und den Umlenkrollen 13 laufen die Transportketten 11 auf Auflageplatten 15a. Die Spannung der Transportketten 11 erfolgt über einen einstellbaren Spanner 10 welcher auf die Umlenkrollen 13 wirkt, diese sind auf einem Trägerement 13a gelagert welches mittels zweier, mit Langlöchern 13c versehener, Flügel 13b an, mit der feststehenden Struktur der Transporteinheit fest verbundenen, Zapfen 13d verschiebbar sind. Zwischen dem besagten verschiebbaren Trägerelement 13a und einem an der feststehenden Struktur der Transporteinheit befestigten Trägerelement 10a wirken Druckfedern 10h. Eine Zugstange 10j ist mit einem Ende im Mittelbereich am, mit den Umlenkrollen 13 ausgestatteten, Trägerelement 13a befestigt, durchdringt das Trägerelement 10a und ist am entgegengesetzten Ende mit Laufrollen 10n versehen. Am feststehenden Trägerelement 10a ist ein Gleitelement 10c vorgesehen welches parallel zur Achse der Umlenkrollen 13 mittels einer, in der an einem der Enden 10d des Gleitelements 10 c vorgesehenen Gewindebohrung, verdrehbaren Gewindespindel 10k, verschiebbar 10s ist. Das Ende der Gewindespindel 10k weist einen, z.B. sechskantigen, Kopf auf um mit einem geeigneten Schlüssel bewegt 10r werden zu können; das selbe Ende ist drehbar 10r an einem, an der feststehenden Struktur der Transporteinheit befestigten, Trägerelement 10m gelagert. Das besagte Gleitelement 10c weist eine schiefe Ebene 10e auf an welcher die Laufrollen 10n welche am Ende der Zugstange 10j vorgesehen sind wirken, wobei diese durch Verschieben 10s des Gleitelementes 10c infolge Drehen 10r der Gewindespindel 10k, bewegt 10v wird. Die Bewegung 10v der Zugstange 10j bewirkt das Verstellen des Trägerelements 13a samt den Umlenkrollen 13 und somit eine Veränderung der Spannung der Transportketten 11 sowie des Druckes der Federn 10h. Am Mechanismus der Spannvorrichtung für die Transportketten 11 welche wesentlich aus dem feststehenden Trägerelement 10a und aus dem Gleitelement 10c besteht welches mittels Gewindespindel 10k und der, mit dem Trägerelement 13a für die Umlenkrollen 13 verbundenen, Zugstange 10j bewegbar ist, ist erfindungsgemäß ein schwenkbares 10t Spannelement 10g vorgesehen welches mit einem Ende in einen Sitz am feststehenden Trägerelement 10a eingreift, während es mit dem anderen Ende welches eine durchgehende Bohrung aufweist an der Zugstange 10j wirkt welche leicht kleineren Durchmesser als die Bohrung am schwenkbaren 10t Spanelement 10g, hat. An der Zugstange 10j ist eine, zwischen dem feststehenden Trägerelement 10a und dem schwenkbaren Spannelement 10g wirkende Druckfeder 10i vorgesehen so dass dieses in die angewinkelte Position gedrückt wird um die Sperrspannung an der Zugstange 10j zu erreichen und so die Rückstellbewegung 10v der Umlenkrollen in eine Position welche weniger Spannung der Transportketten 11 bewirken würde, zu verhindern. Die besagte Sperrung der Rückführbewegung der Zugstange 10j wird dadurch aufgehoben, dass durch Drehen 10r der Gewindespindel 10k, zwecks Verstellen 10s des Gleitelements 10c, die schiefe Ebene 10e einerseits einen Zug auf der Zugstange 10j bewirkt während auf der anderen Seite die schiefe Ebene 10f mit dem entsprechenden Vorsprung 10u einen Schub auf das schwenkbare Sperrelement 10g ausübt wodurch die Feder 10i komprimiert wird und die Zugstange 10j freigegeben wird.

An beiden Längsseiten der Transporteinheiten sind Begrenzungswände 16 vorgesehen welche über die Auflagefläche der Transportketten 11 hinausragen.

## Patentansprüche

1. Transporteinheit (4, 5, 5v, 5w, 6) für Rollwägen (8) mit vier Rädern (8, 8b), bestehend aus einer Rahmenstruktur für die Lagerung von Antriebsrädern (12) oder Antriebsrollen und Umlenkrädern oder Umlenkrollen (13) für mindestens eine Transportkette (11), wobei die Transportkette (11) aus starren, quer zur Bewegung der Transportkette angeordneten und durch Zapfen (11e) verketteten, Auflageelementen (11a) und Mitnahmeelementen (11c) besteht, wobei die ersten eine Reihe von Auflagevorsprüngen (11b) aufweisen welche sich in Bewegungsrichtung der Transportkette erstrecken und unter sich gleich, quer zur Bewegungsrichtung dieser, weniger als die Breite der Räder (8a) der Rollwägen (8), beabstandet sind, während die zweiten, über die Höhe der Auflagevorsprünge (11b) abragende Mitnahmevorsprünge (11d) mit einer vertikalen Stirnseite und einer abgerundeten oder abgeschrägten Rückseite aufweisen, wobei diese mit den Auflagevorsprüngen (11b) in Längsrichtung fluchten und die gleiche Breite wie diese aufweisen und zwischen diesen Vorsprüngen (11b, 11d) Vertiefungen vorgesehen sind, welche die gleiche Breite aufweisen und wobei der Abstand zwischen den Mitnahmeelementen (11c), gemäß der Bewegungsrichtung der Transportkette (11), größer als der Durchmesser der Räder (8a) der Rollwägen (8) ist, **dadurch gekennzeichnet, dass** die Transportkette in einem belasteten Bereich zwischen den Antriebsrädern (12) und Umlenkrollen (13) auf Auflageplatten (15a) gleitet, und dass für das störungsfreie Überfahren seitens der Rollwägen (8) von einer Auffahrrampe (3) auf die erste Transporteinheit (4) einer Transportstrecke, bzw. von der letzten Transporteinheit (6) auf eine Abfahrrampe, bzw. von einer Transporteinheit (4) auf die anschließende Transporteinheit (5) einer Transportstrecke, ein Kammelement (14) vorgesehen ist, welches vertikal und gemäß der Steigung, bzw. dem Gefälle, der Transporteinheit (4, 6) an der Rahmenstruktur angebracht ist, bzw. an der Auffahr- oder Abfahrrampe, verstellbar anbringbar ist und dass die Zinken (14b) des besagten Kammelements (14) einen Querschnitt aufweisen, welcher dem Querschnitt der Vertiefungen zwischen den Auflagevorsprüngen (11b) und den Mitnahmevorsprüngen (11d) der Transportkette (11) entspricht.

2. Transporteinheit gemäß Anspruch 1, **dadurch gekennzeichnet, dass** die Umlenkrollen (13) auf einem Trägerelement (13a) gelagert sind welches, gemäß der Bewegungsrichtung der Transportkette (11), gleitend an der feststehenden Rahmenstruktur der Transporteinheit angebracht ist wobei auf dieses, von einer Zugstange (10j) durchdrungene, Trägerelement (13a) Druckfedern (10h) wirken welche an einem, mit der Rahmenstruktur fest verbundenen, Trägerelement (10a) aufliegen, dass ein Ende der Zugstange (10j) im Mittelbereich des gleitenden Trägerelements (13a) drehbar befestigt ist während das entgegengesetzte, mit Laufrollen (10n) versehene, Ende an einer schiefen Ebene (10e) eines am Trägerelement (10a) verstellbar (10s) geführten Gleitelements (10c) wirkt, wobei dieses mittels, in einer am Endbereich (10d) des Gleitelements (10c) vorgesehenen Gewindebohrung eingesetzten, Gewindespindel (10k) verstellbar (10s) ist, dabei ist das Antriebsende der Gewindespindel (10k) drehbar und nicht längsverschiebbar an der feststehenden Rahmenstruktur der Transporteinheit (4, 5, 5v, 5w, 6) gehaltert (10m) und dass auf die Zugstange (10j) ein Spannelement (10g) wirkt welches schwenkbar (10t) mit einem Ende in einem Sitz (10b) am Trägerelement (10a) gelagert ist und mit einer Bohrung, welche im Bereich des entgegengesetzten Endes vorgesehen ist an der diese Bohrung durchdringenden Zugstange (10j) wirkt, dabei wird dieser Endbereich von einer Feder (10i) in die arretierende Spannposition gedrückt, die Freigabe der Zugstange (10j) erfolgt hingegen durch Betätigen (10s) des Gleitelements (10c) infolge Drehhung (10r) der Gewindespindel so dass durch die schiefe Ebene (10f) am Vorsprung (10u) des Gleitelements (10c), über das Spannelement (10g), die Feder (10i) komprimiert wird.

## Claims

1. Transport unit (4, 5, 5v, 5w, 6) for roll containers (8) with four wheels (8, 8b), consisting of a frame structure for mounting drive wheels (12) or drive rollers and deflection wheels or deflection rollers (13) for at least one transport chain (11), wherein the transport chain (11) consists of rigid supporting elements (11a) and entraining elements (11c) arranged transversely to the movement of the transport chain and linked by pins (11e), wherein the supporting elements comprise a row of supporting projections (11b) which extend in the direction of movement of the transport chain and are equally spaced from one another, transversely to the direction of movement thereof, by less than the width of the wheels (8a) of the roll containers (8), while the entraining elements comprise entraining projections (11d) which project above the height of the supporting projections (11b) and which have a vertical front side and a rounded or bevelled rear side, wherein said entraining projections are in alignment with the supporting projections (11b) in the longitudinal direction and have the same width as the latter, and provided between said projections (11b, 11d) are depressions which have the same width, and wherein the distance between the entraining elements (11c), in the direction of movement of the transport chain (11), is larger than the diameter of the wheels (8a) of the roll containers (8), **characterized in that** the transport chain slides on support plates (15a) in a loaded area between the drive wheels (12) and deflection rollers (13), and **in that**, to enable trouble-free passage of the roll containers (8) from an entry ramp (3) onto the first transport unit (4) of a transport line, or from the last transport unit (6) onto an exit ramp, or from one transport unit (4) onto the next transport unit (5) of a transport line, a comb element (14) is provided, which is attached to the frame structure vertically and according to the upward or downward gradient of the transport unit (4, 6), or can be adjustably attached to the entry or exit ramp, and **in that** the teeth (14b) of said comb element (14) have a cross-section which corresponds to the cross-section of the depressions between the supporting projections (11b) and the entraining projections (11d) of the transport chain (11).

2. Transport unit according to claim 1, **characterized in that** the deflection rollers (13) are mounted on a carrier element (13a), which is attached to the fixed frame structure of the transport unit in such a way as to be slidable in the direction of movement of the transport chain (11), wherein compression springs (10h), which bear against a carrier element (10a) fixedly connected to the frame structure, act on said carrier element (13a), which is penetrated by a pull rod (10j), **in that** one end of the pull rod (10j) is rotatably fastened in the central region of the sliding carrier element (13a), while the opposite end, which is provided with rollers (10n), acts on an inclined plane (10e) of a sliding element (10c) that is adjustably (10s) guided on the carrier element (10a), wherein said sliding element is adjustable (10s) by means of a threaded spindle (10k) which is inserted into a threaded bore provided at the end region (10d) of the sliding element (10c), the drive end of the threaded spindle (10k) being secured (10m) to the fixed frame structure of the transport unit (4, 5, 5v, 5w, 6) in a rotatable and longitudinally non-displaceable manner, and **in that** a tensioning element (10g) acts on the pull rod (10j), which tensioning element is pivotably (10t) mounted by one end in a seat (10b) on the carrier element (10a) and acts with a bore, which is provided in the region of the opposite end, on the pull rod (10j), which penetrates said bore, said end region being pressed into the locking tensioning position by a spring (10i), the pull rod (10j) in contrast being released by actuating (10s) the sliding element (10c) as a result of rotation (10r) of the threaded spindle so that, due to the inclined plane (10f), the spring (10i) is compressed at the projection (10u) of the sliding element (10c) via the tensioning element (10g).

## Revendications

1. Unité de transport (4, 5, 5v, 5w, 6) pour des chariots (8) à quatre roues (8, 8b), constituée d'une structure de châssis pour le montage de roues motrices (12) ou de poulies moteurs et de roues de renvoi ou de poulies de renvoi (13) pour au moins une chaîne de transport (11), la chaîne de transport (11) étant constituée d'éléments d'appui rigides (11a) disposés transversalement par rapport au mouvement de la chaîne de transport et reliés entre eux par des goupilles (11e) et d'éléments d'entraînement (11c), les premiers comportant une série de saillies d'appui (11b) qui s'étendent dans la direction de déplacement de la chaîne de transport et sont identiques entre elles, perpendiculaires à la direction de déplacement de celle-ci, et espacées les unes des autres de moins que la largeur des roues (8a) des chariots (8), tandis que les seconds comportent des saillies d'entraînement (11d) dépassant la hauteur des saillies d'appui (11b), avec une face frontale verticale et une face arrière arrondie ou biseautée, celles-ci étant alignées dans le sens longitudinal avec les saillies d'appui (11b) et présentant la même largeur que celles-ci, et entre ces saillies (11b, 11d) sont prévus des creux ayant la même largeur, la distance entre les éléments d'entraînement (11c), dans le sens de déplacement de la chaîne de transport (11), étant supérieure au diamètre des roues (8a) des chariots (8),
**caractérisé en ce que**
la chaîne de transport glisse sur des plaques d'appui (15a) dans une zone chargée entre les roues d'entraînement (12) et les poulies de renvoi (13), et **en ce qu'**un élément en forme de peigne (14) est prévu pour permettre aux chariots (8) de passer sans encombre d'une rampe d'accès (3) à la première unité de transport (4) d'un parcours de transport, ou de la dernière unité de transport (6) sur une rampe de descente, ou d'une unité de transport (4) sur l'unité de transport suivante (5) d'un parcours de transport, ledit élément en peigne (14) étant monté verticalement et en fonction de la pente ascendante ou descendante de l'unité de transport (4, 6) sur la structure du châssis ou apte à être monté de manière réglable sur la rampe d'accès ou de descente, et **en ce que** les dents (14b) dudit élément en forme de peigne (14) présentent une section transversale qui correspond à la section transversale des creux entre les saillies d'appui (11b) et les saillies d'entraînement (11d) de la chaîne de transport (11).

2. Unité de transport selon la revendication 1 , **caractérisée en ce que** les poulies de renvoi (13) sont montées sur un organe de support (13a) qui, dans le sens de déplacement de la chaîne de transport (11), est fixé de manière coulissante à la structure de châssis fixe de l'unité de transport, l'organe de support traversé par une tige de traction (10j) (13a) étant soumis à l'action de ressorts de pression (10h) qui reposent sur un organe de support (10a) solidaire de la structure de châssis, une extrémité de la tige de traction (10j) étant fixée de manière pivotante dans la zone centrale de l'organe de support coulissant (13a), tandis que l'extrémité opposée, pourvue de galets de roulement (10n), agit sur un plan incliné (10e) d'un élément coulissant (10c) guidé de manière réglable (10s) sur l'organe de support (10a), celui-ci étant réglable (10s) au moyen d'une broche filetée (10k) insérée dans un alésage fileté prévu dans la zone d'extrémité (10d) de l'élément coulissant (10c), l'extrémité d'entraînement de la broche filetée (10k) étant fixée de manière rotative et non déplaçable longitudinalement (10m) dans la structure de châssis fixe de l'unité de transport (4, 5, 5v, 5w, 6), un élément de serrage (10g) agissant sur la tige de traction (10j), lequel élément de serrage étant monté de manière pivotante (10t) avec une extrémité dans un siège (10b) sur l'organe de support (10a) et agissant avec un alésage prévu dans la zone de l'extrémité opposée sur la tige de traction traversant cet alésage (10j), cette zone d'extrémité étant poussée dans la position de serrage par un ressort (10i), la libération de la tige de traction (10j) s'effectuant par contre par l'actionnement (10s) de l'élément coulissant (10c) suite à la rotation (10r) de la broche filetée, de sorte que le ressort (10i) est comprimé par le plan incliné (10f) au niveau de la saillie (10u) de l'élément coulissant (10c), au moyen de l'élément de serrage (10g).
